## Europäisches Patentamt
## European Patent Office
## Office européen des brevets

(19)

(11) Veröffentlichungsnummer: **0 095 121**
**A2**

(12) ## EUROPÄISCHE PATENTANMELDUNG

(21) Anmeldenummer: 83104822.8

(22) Anmeldetag: 16.05.83

(51) Int. Cl.³: **B 29 D 11/00**

(30) Priorität: 16.05.82 CH 3361/82

(43) Veröffentlichungstag der Anmeldung:
30.11.83 Patentblatt 83/48

(84) Benannte Vertragsstaaten:
AT BE CH DE FR GB IT LI LU NL SE

(71) Anmelder: Hacker, Kurt
Birkenwaldstrasse 155
D-7000 Stuttgart 1(DE)

(72) Erfinder: Hacker, Kurt
Birkenwaldstrasse 155
D-7000 Stuttgart 1(DE)

(74) Vertreter: Fiedler, Otto Karl, Dipl.-Ing.
Hemminger Strasse 4
D-7015 Korntal-Münchingen 2(DE)

(54) Verfahren und Vorrichtung zur Herstellung eines wenigstens teilweise gewölbten, plattenförmigen Spiegelkörpers aus thermoplastischem Kunststoff.

(57) Bei der Herstellung von teilweise oder vollständig gewölbten, plattenförmigen Spiegelkörpern aus thermoplastischen Kunststoff ist die Einhaltung einer Formgenauigkeit, wie sie insbesondere für Fahrzeug-Rückblickspiegel erforderlich ist, mit Schwierigkeiten verbunden.

Zur Lösung wird ein kreisförmig begrenzter Plattenrohling (PR) durch Strahlungsaufheizung plastifiziert und in rechtwinkliger Anordnung zur Mittelachse (X-X) eines Formkörpers (FK) mit zum Plattenrohling hin konvexer, rotationssymmetrischer Formfläche (FF) zur Anlage an der Formfläche (FF) gebracht. Nach Verfestigung wird der geformte Plattenrohling zerschnitten, so dass sich mindestens ein Spiegelkörper ergibt.

Zur Vermeidung von wellenförmigen Formfehlern in der Spiegelfläche wird an der Formfläche (FF) eine gegen Druck in Normalrichtung zur Formfläche (FF) weichelastische Zwischenlage (ZL) vorgesehen.

Fig. 1

Verfahren und Vorrichtung zur Herstellung eines wenigstens teilweise gewölbten, plattenförmigen Spiegelkörpers aus thermoplastischem Kunststoff

Die Erfindung bezieht sich auf ein Verfahren zur Herstellung eines weingstens teilweise gewölbten, plattenförmigen Spiegelkörpers aus thermoplastischem Kunststoff, insbesondere eines Fahrzeug-Rückblickspiegels mit einem wenigstens annähernd ebenen und mindestens einem sich an diesen anschliessenden gewölbten Spiegelflächenabschnitt. Die Erfindung bezieht sich ferner auf eine Vorrichtung zur Durchführung eines solchen Verfahrens.

Es sind plattenförmige, zur Sichtseite hin konvex gewölbte Fahrzeug-Rückblickspiegel aus Kunststoff mit entsprechender Verspiegelung bekannt. Die Formgenauigkeit der Spiegelfläche unterliegt vergleichsweise grossen Anforderungen, was die Herstellung erschwert und bisher nur für über die ganze Spiegelfläche gewölbten Spiegeln eine kommerzielle Herstellung zugelassen hat. Erwünscht ist dagegen die Herstellung von Spiegeln, und zwar aus bekannten Gründen der Optimierung des Gesamt-Blickwinkels einerseits und der naturgetreuen Gegenstandswiedergabe in bestimmten Bereichen des Blickwinkels andererseits, die einen ebenen Spiegelflächenabschnitt und mindestens einen sich an diesen anschliessenden, gewölbten Spiegelflächenabschnitt aufweisen. Solche Spiegelformen sind theoretisch bekannt, nicht jedoch ihre wirtschaftliche Herstellbarkeit aus plattenförmigem Kunststoff, insbesondere wegen der besonders hohen Formgenauigkeitsanforderungen im ebenen Bereich und wegen der Schwierigkeit, eine unregelmässige Verformung im Uebergangsbereich zwischen ebenem und gewölbtem Spiegelflächenabschnitt zu vermeiden.

Aufgabe der Erfindung ist daher die Schaffung eines Herstellungsverfahrens der eingangs genannten Art, welches bei erträglichem Aufwand die Einhaltung der Anforderungen hinsichtlich Formgenauigkeit der Spiegelfläche ermöglicht. Die Lösung dieser Aufgabe kennzeichnet sich durch die Merkmale des Anspruchs 1, während vorrichtungstechnische Lösungen durch die Merkmale durch die Merkmale der Ansprüche 11 bzw. 13 bzw. 14 bzw. 15 bestimmt sind.

Die Erfindung wird weiter unter Bezugnahme auf die in den Zeichnungen schematisch dargestellte Ausführungsbeispiele erläutert.

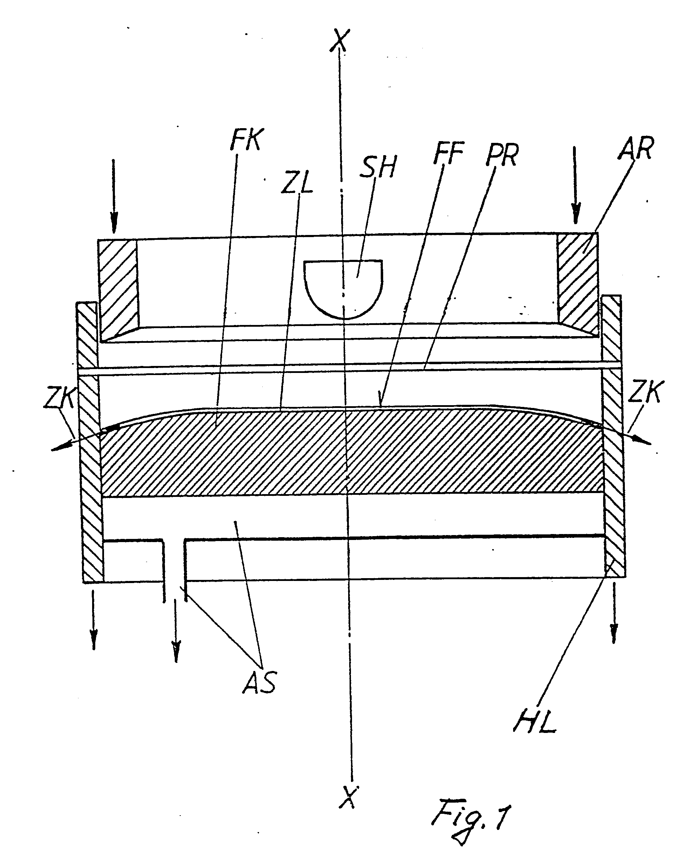

Die Vorrichtung nach Fig.1 - in einem Axialschnitt durch die Mittelachse X-X eines rotationssymmetrischen Formkörpers FK dargestellt - dient zur Verarbeitung je eines aussen kreisförmig begrenzten, gegebenenfalls aber auch vieleckigen Plattenrohlings PR aus ther-

moplastischem Kunststoff, insbesondere Acrylglas, der zunächst in rechtwinkliger Anordnung zur Mittelachse X-X mit Axialabstand von der Formfläche FF gehalten und mittels einer Strahlungs-Heizvorrichtung SH bis zur Plastifizierung erwärmt wird. Eine hierzu dienende, ringförmige Halterung HL wird sodann in Axialrichtung gegen den Formkörper FK bewegt, wobei der Plattenrohling zunächst im mittleren, ebenen Bereich der Formfläche FF zur Anlage kommt. Diese Anlage schreitet dann allmählich radial nach aussen fort und erstreckt sich zunächst auf den Uebergangsbereich zwischen dem ebenen Mittelabschnitt und dem äusseren, toroidförmig gewölbten Randbereich der Formfläche. Mit dem weiteren Fortschritt der Anformbewegung wird innerhalb des Plattenrohlings, und zwar vor allem in dessen äusserem Randbereich, eine tangential zur Formfläche und bezüglich der Mittelachse X-X radial nach aussen gerichtete Zugkraftkomponente ZK erzeugt. Dieser Vorgang wird sodann durch ebenfalls axialen Vorschub und Anpressung eines Aussendruckringes AR an den verformten Plattenrohling unterstützt. Damit ergibt sich erfahrungsgemäss eine einwandfreie, gleichmässige Verformung des Rohlings im kritischen Uebergangsbereich mit radial veränderlicher Krümmung und insbesondere eine einwandfreie Ebenhaltung des mittleren Spiegelabschnitts.

Das Anformen kann unterstützt oder gegebenenfalls auch ausschliesslich herbeigeführt werden mit Hilfe einer Unterdruckbeaufschlagung des Plattenrohlings auf seiner der Formfläche zugewandten Oberfläche. Hierzu ist der Formkörper FK porös, vorzugsweise mikroporös ausgeführt - etwa in Form eines Sinterkörpers - und an seiner Unterseite mit einem entsprechenden Sauganschluss AS versehen.
Die Porosität des Formkörpers ist an der Formfläche so fein zu
halten, dass keine Beeinträchtigung der Oberflächenbeschaffenheit im Hinblick auf die optischen Anforderungen ·eintritt, während im übrigen eine vergleichsweise grobe Durchlässigkeit des
Formkörpers zulässig und von Vorteil ist.

Wesentlich zur gleichmässigen Verformung und zur Erzielung einer
hohen Oberflächenqualität des Spiegelkörpers kann ferner die Einfügung einer Zwischenlage ZL an der Formfläche beitragen. Diese
Zwischenlage ist gegen Druck in Normalrichtung zur Formfläche
weichelastisch ausgebildet, vor allem im kritischen Wölbungsübergangsbereich. Es empfiehlt sich besonders eine gleitfreundlich Oberflächenbeschaffenheit der Zwischenlage bzw. bei Verzicht
auf eine solche der Formfläche selbst, um die erwähnte Zugkraftkomponente in ihrer Fortpflanzung zu den inneren Bereichen des
Plattenrohlings hin nicht zu behindern. Im übrigen muss auch die
Zwischenlage an ihrer dem Plattenrohling zugewandten Oberfläche
entsprechende Anforderungen hinsichtlich Strukturfeinheit erfüllen.
Dies gelingt wieder vorzugsweise mit einer mikroporösen Beschaffenheit. Erfahrungsgemäss werden die Anforderungen einfach und ausreichend mit einer Zwischenlage aus textilem Material von samtartiger Oberflächenbeschaffenheit erfüllt.

Die Weiterverarbeitung des verformten Plattenrohlings zu Spiegelkörpern gewünschter Aussenkontur erfolgt durch Ausschneiden, wobei
eine weitgehende Ausnutzung der Gesamtfläche des Plattenrohlings durch gewisse Kompromisse hinsichtlich der Konturgestaltung möglich ist. Insbesondere können gewölbte Restabschnitte für Zusatz- oder Ansatzspiegel verwendet werden, wie sie in Verbindung mit Innen- oder Aussenspiegeln an Kraftfahrzeugen bekannt sind.

Das Ausschneiden von Spiegelkörpern erfolgt zweckmässig an einem Stapel von axial ausgerichtet übereinanderliegenden, verformten Plattenrohlingen, vorzugsweise mit gebündelten, energiereichen elektromagnetischen Strahlen, insbesondere kohärenten Strahlen, wie Laserstrahlen mit Hilfe an sich bekannter Einrichtungen. Dabei ist es wichtig, zur Erzielung einer sauberen Schnittkontur geringe Abstände zwischen den benachbarten Oberflächen der Plattenrohlinge einzuhalten, etwa durch geeignete, den Schneidvorgang nicht behindernde Zwischenlagen.

Bei der Ausführung nach den Figuren 2 bis 5 ist eine Mehrzahl von je einem Spiegelkörper SP zugeordneten Formflächen FF innerhalb der durch die Gesamtvorrichtung gebildeten Bearbeitungsstation zur Herstellung aus einem grösseren Plattenrohling PR vorgesehen, der an seinem Aussenrand in einer ringförmigen Halterung HL gegen tangentiale Zugspannungen fest eingespannt ist. Die Halterung HL ist relativ zu einem Formkörper FK im wesentlichen in Normalrichtung zu der Formflächenanordnung verfahrbar. Dies ist im Beispiel durch raumfeste Anordnung der Halterung HL und gemäss kinematischer Umkehr entsprechend vertikalbewegliche Lagerung und Antrieb des Formkörpers FK verwirklicht.

Ausgehend von der Ausgangsstellung der Station gemäss Fig.2
wird zunächst der Formkörper FK gemäss Pfeilrichtung in Fig.3
relativ zur Halterung HL nach oben verfahren, bis der plastifizierte Plattenrohling PR über die Formflächen FF gespannt
wird. Dabei werden zunächst in den äusseren Krafteinleitungsbereichen KE innerhalb der Halterung HL Tangential-Zugkraftkomponenten ZK innerhalb des Plattenrohlings erzeugt, die von
der Mitte der Formflächenanordnung zum Aussenrand des Rohlings
gerichtet sind und eine erste Grobanlage sowie Formgebung des
Rohlings unter Ausgleich von in Umfangsrichtung bezüglich der
Formanordnungs-Mittelachse XX verlaufenden Spannungen und Materialstauchungen bzw. -verdünnungen stattfindet.

Danach wird eine oberhalb der Halterung vertikalverfahrbar gelagerte und mit einem nicht dargestellten Antrieb versehene Druckvorrichtung DV - ähnlich dem Aussendruckring AR gemäss Fig.1 wirkend - relativ zum Plattenrohling PR abgesenkt, bis die zugehörigen Druckelemente DE den Rohling unter Bildung von weiteren
Krafteinleitungsstellen KE in Randeinsenkungen ausserhalb der
Formflächen FF pressen. Dabei werden zusätzliche Tangential-
Zugkraftkomponenten ZK mit entsprechender Spannung des Rohlings
und Anpressung an die Formflächen erzeugt. Dadurch erhält der
Rohling seine endgültige Formgebung. Nach Erkalten und Verfestigung werden die einzelnen Spiegelkörper SP ausgeschnitten.

Die Druckelemente DE erstrecken sich längs der Aussenränder RA
der Formflächen FF. Sie sind ring- oder rahmenförmig ausgebildet
und erzeugen so eine gleichförmige Zugspannungs- und Anpressdruckverteilung.

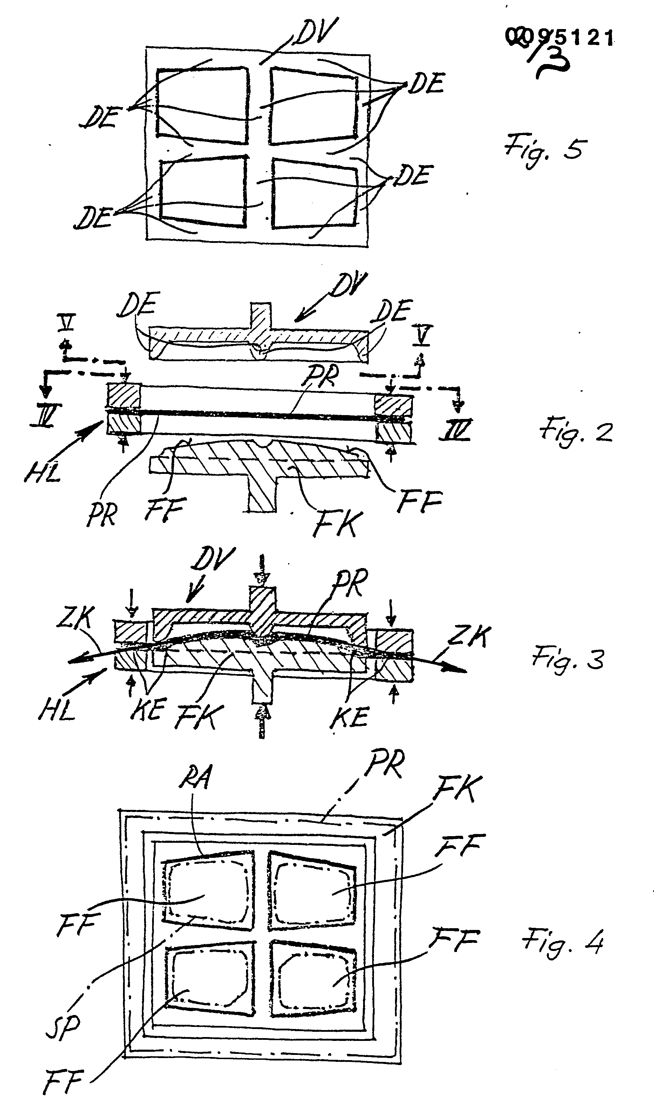

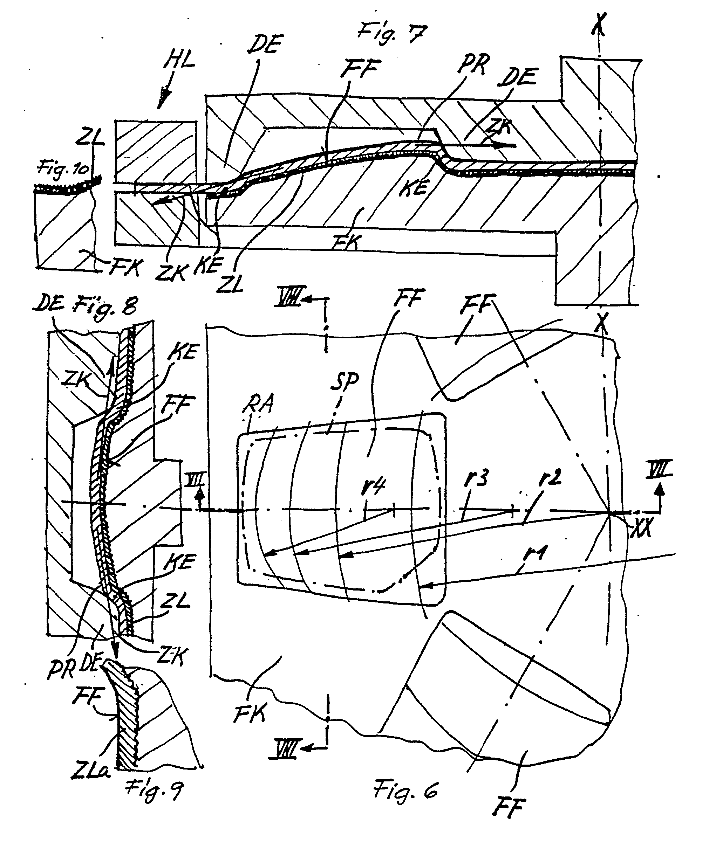

Bei der Ausführung nach den Figuren 6 bis 10 ist eine Mehrzahl von Formflächen FF an der Oberseite eines Mehrfach-Formkörpers FK ähnlich Fig.4, jedoch rotationssymmetrisch bezüglich einer Mittelachse XX verteilt angeordnet. Im Gegensatz zu der Ausführung nach Fig.1 ist jedoch die Wölbung der einzelnen Formflächen FF nicht rotationssymmetrisch zur Achse XX ausgebildet. Die von innen nach aussen progressive Wölbung der einzelnen Formflächen ist nur im Bereich der mittleren Höhenlinie mit dem Radius r3 konzentrisch zur Achse XX, im Bereich der Höhenlinien mit den Radien r1, r2 bzw. r4 jedoch abweichend hiervon bemessen. Durch die in Umfangsrichtung bezüglich der Achse XX seitlich neben den Formflächen FF angeordneten, im wesentlichen radial verlaufenden Druckelemente DE (siehe Fig.8) ergeben sich auch zur Formfläche bzw. zum Plattenkörper tangentiale Zugkraftkomponenten ZK in zirkularer Richtung bezüglich der Achse XX neben den Zugkraftkomponenten (tangential zur Formfläche) jedoch radial zur Achse XX. Insgesamt ergibt sich dadurch eine allseitige Verspannung und Anpressung des Rohlings gegen die Formfläche, gleichwertig zu der Ausführung nach den Figuren 2 bis 5, jedoch verbessert gegenüber derjenigen nach Fig.1.

In den Figuren 7, 8 und 10 ist nochmals eine poröse Zwischenlage ZL an den Formflächen FF angedeutet. Die Funktion ist bereits anhand der Ausführung nach Fig.1 erläutert worden.

Besondere Vorteile hinsichtlich der einfachen Herstellungstechnologie der Formflächen bietet eine aus druckelastischem Mate-

rial, beispielsweise Silicongummi, bestehende Zwischenlage ZLa, wie in Fig.9 angedeutet. Mit Vorteil kann auch eine solche Zwischenlage mit einer porösen Zwischenschicht ZL kombiniert werden, um die Bildung von formstörenden Lufteinschlüssen zu vermeiden. Gegebenenfalls kommt auch mit Vorteil eine poröse Ausbildung der druckelastischen Zwischenlage in Betracht, z.B. aus offenzelligem Schaumstoff. Letzterer kann u.U. auch nach den jeweiligen Materialeigenschaften des Rohlings hartelastisch ausgeführt werden. Eine gewisse Druckelastizität hat aber im allgemeinen den Vorteil des selbsttätigen Ausgleichs von Formungenauigkeiten kleinerer Ausdehnung.

A n s p r ü c h e

1. Verfahren zur Herstellung eines wenigstens teilweise
   gewölbten, plattenförmigen Spiegelkörpers aus thermoplastischem Material, insbesondere zur Herstellung eines
   Fahrzeug-Rückspiegels mit einem wenigstens annähernd ebenen und mindestens einem gewölbten Spiegelflächenabschnitt,
   gekennzeichnet durch folgende Verfahrensschritte:

   a) ein Plattenrohling (PR) wird durch Aufheizen, vorzugsweise durch Strahlungsheizung, plastifiziert;

   b) der Plattenrohling (PR) wird an einer wenigstens abschnittsweise, vorzugsweise in seinem äusseren Randbereich, konvex gewölbten Formfläche (FF) zur Anlage
      gebracht;

   c) nach Verfestigung wird der geformte Plattenrohling (PR)
      zur Gewinnung mindestens eines Spiegelkörpers zerschnitten.

2. Verfahren nach Anspruch 1, dadurch gekennzeichnet, dass der plastifizierte Plattenrohling (PR) durch vorzugsweise in seinem äusseren Randbereich konzentrierte Druckbeaufschlagung in Richtung parallel zur Mittelachse (X-X) an den Formkörper (FK) angeformt wird.

3. Verfahren nach Anspruch 1 oder 2, dadurch gekennzeichnet, dass der plastifizierte Plattenrohling (PR) durch Ansaugen an den Formkörper (FK) angeformt wird.

4. Verfahren nach einem der vorangehenden Ansprüche, dadurch gekennzeichnet, dass beim Anformen innerhalb des plastifizierten Plattenrohlings (PR), vorzugsweise innerhalb dessen äusseren Randbereiches, eine tangential zur Formfläche (FF) und zum Aussenrand des Plattenrohlings (PR) bzw. jeweils einer Formfläche (FF) gerichtete Zugkraftkomponente (ZK) erzeugt wird.

5. Verfahren nach Anspruch 4, dadurch gekennzeichnet, dass die Zugkraftkomponente (ZK) im Randbereich des Plattenrohlings (PR) sowie wenigstens teilweise über dessen Randlinie verteilt eingeleitet wird.

6. Verfahren nach Anspruch 4 oder 5, dadurch gekennzeichnet, dass die zum Aussenrand des Plattenrohlings bzw. jeweils einer Formfläche (FF) gerichtete Zugkraftkomponente (ZK) im Verlauf des Anformvorganges innerhalb von Plattenbereichen eingeleitet wird, die vom Aussenrand des Plattenrohlings aus nach innen verlagert werden.

7. Verfahren nach Anspruch 6, dadurch gekennzeichnet, dass zum Anformen eines Plattenrohlings (PR) an eine Mehrzahl von nebeneinanderliegenden, wenigstens teilweise konvex gewölbten Spiegelkörper-Formflächen (FF) zunächst eine Vorspannungs-Zugkraftkomponente über den Aussenrand des Plattenrohlings (PR) verteilt eingeleitet wird und danach im Bereich des Aussenrandes der einzelnen Spiegelkörper-Formflächen (FF) weitere Zugkraftkomponenten eingeleitet werden.

8. Verfahren nach einem der Ansprüche 4 bis 7, dadurch gekennzeichnet, dass die Zugkraftkomponente (ZK) durch gegen die Formfläche (FF) gerichtete Verschiebung von Krafteinleitungsbereichen (KE) des aussen zugfest eingespannten Plattenrohlings erzeugt wird.

9. Verfahren zur Herstellung von wenigstens abschnittsweise gewölbten, plattenförmigen Spiegelkörpern aus vorgeformten Plattenrohlingen, insbesondere nach einem der Ansprüche 1 bis 8, dadurch gekennzeichnet, dass eine Mehrzahl von in Axialrichtung ihrer Mittel- oder Wölbungsachsen übereinanderliegend ausgerichteten Plattenrohlingen gleichzeitig einem Kontur-Schneidvorgang unterzogen wird.

10. Verfahren nach Anspruch 9, dadurch gekennzeichnet, dass die übereinanderliegenden Plattenrohlinge (PR) während des Schneidvorganges an ihren einander benachbarten Oberflächen auf Abstand gehalten werden, vorzugsweise mittels Zwischenlagen.

11. Vorrichtung zur Durchführung des Verfahrens nach einem der vorangehenden Ansprüche, dadurch gekennzeichnet, dass an der Formfläche (FF) eine gegen Druck in Normalrichtung zur Formfläche wenigstens abschnittsweise weichelastische Zwischenlage (ZL) vorgesehen ist.

12. Vorrichtung nach Anspruch 11, gekennzeichnet durch eine poröse, insbesondere mikroporöse, vorzugsweise textile und an ihrer dem Plattenrohling (PR) zugewandten Oberfläche samtartige Zwischenlage (ZL).

13. Vorrichtung zur Durchführung des Verfahrens nach Anspruch 3, insbesondere Vorrichtung nach Anspruch 11 oder 12, gekennzeichnet durch eine wenigstens teilweise poröse, vorzugsweise mikroporöse Formfläche (FF) mit einer Vorrichtung (AS) zur Erzeugung von Unterdruck in den Poren der Formfläche (FF) zwecks Ansaugen des Plattenrohlings an die Formfläche (FF):

14. Vorrichtung nach einem der Ansprüche 4 bis 8, insbesondere Vorrichtung nach einem der Ansprüche 11 bis 13, dadurch gekennzeichnet, dass relativ zu der Spiegelkörper-Formfläche (FF) verfahrbare, vorzugsweise rahmenförmige Halterung (HL) zum Spannen und Verschieben des Plattenrohlings (PR) vorgesehen ist.

15. Vorrichtung zur Durchführung des Verfahrens nach einem der Ansprüche 1 bis 10, gekennzeichnet durch mindestens ein relativ zu der Spiegelkörper-Formfläche (FF) verfahrbares, sich jeweils wenigstens teilweise längs des Aussentandes einer Spiegelkörper-Formfläche (FF) erstreckendes Druckelement (AR) zum Anpressen des Plattenrohlings (PR) gegen die Formfläche (FF) und/oder zur Erzeugung von Tangential-Zugkraftkomponenten im Plattenmaterial.

16. Vorrichtung nach Anspruch 14 oder 15, dadurch gekennzeichnet, dass eine Mehrzahl von Spiegelkörper-Formflächen (FF) innerhalb einer Bearbeitungsstation einem Plattenrohling (PR) zugeordnet ist und dass mindestens für einen Teil der Spiegelkörper-Formflächen (FF) ein sich wenigstens teilweise längs des Formflächen-Aussenrandes erstreckendes, in Bezug auf die Formflächenanordnung verfahrbares, vorzugsweise ring- oder teilringförmiges, die Zugehörige Formfläche umgreifendes Druckelement (DE) vorgesehen ist.

1/3

0095121

Fig. 1

APC-01 3/1

Fig. 5

Fig. 2

Fig. 3

Fig. 4

0095121

3/3

Fig. 7

Fig. 8

Fig. 9

Fig. 6

APO-01 3/2